# EUROPEAN PATENT APPLICATION

(11) **EP 4 431 557 A1**
(43) Date of publication of application: **18.09.2024**
(21) Application number: 22893228.1
(22) Date of filing: 10.11.2022
(51) Int. Cl.: C08K 5/00, C08K 5/10, C08L 27/06, C08L 91/00

(54) **PLASTICIZER COMPOSITION, VINYLCHLORIDE RESIN COMPOSITION COMPRISING SAME, AND MOLDED PRODUCT COMPRISING SAME**

(30) Priority: 10.11.2021 KR 20210153913; 10.11.2021 KR 20210153914
(71) Applicant: Hanwha Solutions Corporation, Jung-gu Seoul 04541 (KR)
(72) Inventor: YOO, Myung-Ik, Daejeon 34128 (KR); KIM, Jaesong, Daejeon 34128 (KR)
(74) Representative: Berggren Oy
(86) International application number: PCT/KR2022/017656
(87) International publication number: WO 2023/085809

(57) **Abstract**

The present disclosure relates to a plasticizer composition with less unpleasant odor, low volatilization loss, and excellent thermal stability even without containing a phthalate material, a vinyl chloride resin composition including the same, and a product including the same.

## Description

### [TECHNICAL FIELD]

### CROSS-REFERENCE TO RELATED APPLICATION(S)

This application claims the benefits of Korean Patent Applications No. 10-2021-0153913 filed on November 10, 2021 and No. 10-2021-0153914 filed on November 10, 2021 with the Korean Intellectual Property Office, the disclosure of which is incorporated herein by reference in its entirety.

The present disclosure relates to a plasticizer composition, a vinyl chloride resin composition including the same, and a product including the same. Specifically, the present disclosure relates to a plasticizer composition including no phthalate plasticizer, a vinyl chloride resin composition including the same, and a product including the same.

### [BACKGROUND OF ART]

A vinyl chloride resin includes a homopolymer of vinyl chloride and a copolymer containing 50% or more of vinyl chloride, and is one of five general-purpose thermoplastic resins prepared by suspension polymerization and emulsion polymerization. A polyvinyl chloride resin prepared by emulsion polymerization is mixed with a plasticizer, a stabilizer, a filler, a blowing agent, a pigment, a viscosity depressant, titanium dioxide (TiO₂), and a sub-material having a specific function to be used in a plastisol form in various fields such as a floor material, wall paper, tarpaulin, artificial leathers, toys, and automobile undercoating materials, through a coating forming method or mold forming method.

In the vinyl chloride resin compositions, the plasticizers are liquid components that occupy the largest content, and examples thereof include phthalate-based products such as di-2-ethylhexyl phthalate (DEHP), di-isononyl phthalate (DINP), di-iso-decyl phthalate (DIDP), butyl benzyl phthalate (BBP), and di-n-butyl phthalate (DBP). In particular, DINP has been widely used.

However, the phthalate-based plasticizers, which are endocrine disrupters that interfere or disrupt the human hormonal actions, are socially considered suspicious as environmental hormones. Thus, there is a movement to regulate the phthalate plasticizers.

Accordingly, there have been attempts to use a terephthalate ester-based plasticizer (e.g., DOTP), a cyclohexane dicarboxylic acid ester-based plasticizer (e.g., DINCH, DEHCH), or a polyol ether-based plasticizer (pentaerythritol tetravalerate) alone as eco-friendly non-phthalate plasticizers for plastisols.

In addition, citrate-based plasticizers (TBC, ATBC, TEHC, TNC, TBOC, ATHC, ATOC, THC, etc.) were added to improve migration resistance of plasticizers such as DOTP, DEHCH, and DINCH. However, the citrate-based plasticizers have a characteristic pungent and unpleasant odor, causing discomfort during processing and use. In addition, product durability may be deteriorated due to extreme volatility at high temperatures. Further, when they are mixed at a predetermined ratio or more, the viscosity of the plastisol increases and the change in viscosity over time becomes very large, so that there is a disadvantage in using them for plastisols.

Recently, for environmental protection and resource recycling, research has been conducted to recover useful resources from waste synthetic resins or by-products generated in the production of synthetic resins. In addition, research to reduce carbon emissions generated in the production of synthetic resin products is being actively conducted.

As a recycling technology of waste synthetic resins, in particular, a method of recycling waste polyesters is widely known. For example, a method of depolymerizing waste polyesters in the presence of a catalyst to recycle them into terephthalic acid, dimethyl terephthalate, and ethylene glycol as raw materials is known. The recycling terephthalic acid and dimethyl terephthalate may be recycled into dioctyl terephthalate, which is a useful material as a plasticizer, through esterification or transesterification.

Dioctyl terephthalate is a widely used plasticizer, and dioctyl terephthalate recovered through the recycling process may also be used as a plasticizer for polymer resins. However, the recycling dioctyl terephthalate has disadvantages such as a yellow color and a foul smell compared to pure dioctyl terephthalate due to impurities mixed in during the recycling process. Accordingly, there is a problem in that the recycling dioctyl terephthalate can be used only in the manufacture of relatively low-quality products.

Accordingly, there is still a need for a plasticizer composition for vinyl chloride resin with less unpleasant odor, low volatilization loss, and excellent elongation and migration resistance, and a plasticizer composition for vinyl chloride resin with a low unpleasant odor and low volatilization loss, which can reduce carbon emissions by using recycled raw materials.

### [DETAILED DESCRIPTION OF THE INVENTION]

### [Technical Problem]

In the present disclosure, there are provided a plasticizer composition including no phthalate material, a vinyl chloride resin composition including the same, and a product including the same.

Specifically, there are provided a plasticizer composition with less unpleasant odor, low volatilization loss, excellent thermal stability, excellent elongation, excellent migration resistance, and fast gelling rate even without containing a phthalate material, a vinyl chloride resin composition including the same, and a product including the same.

### [Technical Solution]

One embodiment of the present disclosure is a plasticizer composition including dioctyl terephthalate (DOTP), a vegetable oil, and an epoxidized vegetable oil, wherein the plasticizer composition may include 20 to 70 parts by weight of dioctyl terephthalate, 10 to 40 parts by weight of a vegetable oil, and 10 to 40 parts by weight of an epoxidized vegetable oil based on 100 parts by weight of the plasticizer composition.

In addition, one embodiment of the present disclosure is a plasticizer composition including recycling dioctyl terephthalate (R-DOTP), a vegetable oil, and an epoxidized vegetable oil, wherein the plasticizer composition may include 20 to 70 parts by weight of dioctyl terephthalate, 10 to 40 parts by weight of a vegetable oil, and 10 to 40 parts by weight of an epoxidized vegetable oil based on 100 parts by weight of the plasticizer composition.

Further, the vinyl chloride resin composition of one embodiment of the present disclosure may include a vinyl chloride resin, and the plasticizer composition.

Further, the product of one embodiment of the present disclosure may include the vinyl chloride resin composition.

### [ADVANTAGEOUS EFFECTS]

According to the present disclosure, it is possible to provide a plasticizer composition with less unpleasant odor, low volatilization loss, and excellent thermal stability and low-temperature stability.

In addition, according to the present disclosure, it is possible to provide an optimal mixing ratio of a plasticizer composition that can improve physical properties of the vinyl chloride resin.

In addition, it is possible to provide a vinyl chloride resin composition with excellent physical properties such as elongation, migration resistance, and gelling rate by including the plasticizer composition according to the present disclosure.

Further, it is possible to provide a vinyl chloride resin composition that can be used in a sealing film for food packaging by including the plasticizer composition according to the present disclosure.

Additionally, it is possible to provide a plasticizer composition that helps reduce carbon emissions by using recycled raw materials according to the present disclosure.

### [DETAILED DESCRIPTION OF THE EMBODIMENTS]

The terms "the first", "the second", and the like are used to describe a variety of components, and these terms are merely employed to distinguish a certain component from other components.

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Hereinafter, the plasticizer composition according to the embodiment of the present invention will be described in detail.

In the present disclosure, there is provided a plasticizer composition with less unpleasant odor, low volatilization loss, excellent thermal stability, and excellent low-temperature stability even without containing a phthalate material, which can improve elongation, migration resistance, and gelling rate when used in the vinyl chloride resin. Further, there are also provided a vinyl chloride resin composition including the same, and a product including the same.

The migration of the plasticizer refers to a phenomenon in which a part of the plasticizer mixed with a polymer resin flows out of the polymer resin. When leaked plasticizers enter the body, it may inhibit the normal activity of the endocrine system directly involved in the life activity or may trigger an abnormal reaction to cause lethal harm, and thus the migration of the plasticizers should be inhibited as much as possible. Accordingly, migration resistance refers to the characteristic that additives such as plasticizers do not migrate out of the product after molding the resin into a final product.

The phthalate compound may be represented by the following [Chemical Formula 1]. 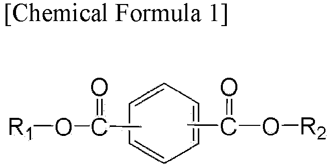 in Chemical Formula 1, R₁ and R₂ are each independently a C4 to C12 linear or branched alkyl group. Preferably, R₁ and R₂ may each independently be n-butyl, n-hexyl, n-octyl, 2-ethylhexyl, isononyl, or isodecyl.

The phthalate-based compound of Chemical Formula 1 may be represented by the following Chemical Formulae 1-1 to 1-3 depending on the position of the substituent. 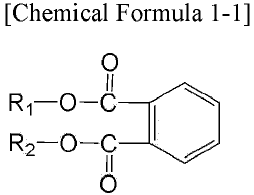 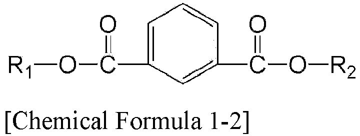 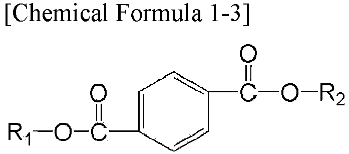 in Chemical Formulae 1-1 to 1-3, R₁ and R₂ are as defined in Chemical Formula 1.

The Chemical Formula 1-1 is a phthalate compound conventionally used as a plasticizer, and specific example thereof may be dibutyl phthalate (DBP), dihexyl phthalate (DHP), dioctyl phthalate (DOP; di(2-ethylhexyl)phthalate), di-n-octyl phthalate (DnOP), diisononyl phthalate, or diisodecyl phthalate (DIDP).

Specific example of the isophthalalate compound represented by the Chemical Formula 1-2 may be dibutyl isophthalalate (DBIP), dioctyl isophthalate (DOIP; di(2-ethylhexyl)isophthalate), diisononyl isophthalate (DINIP), or diisodecyl isophthalate (DIDIP).

Specific example of the terephthalate compound represented by the Chemical Formula 1-3 may be dibutyl terephthalate (DBTP), dioctyl terephthalate (DOTP; di(2-ethylhexyl)terephthalate), diisononyl terephthalate (DINTP), or diisodecyl terephthalate (DIDTP).

Accordingly, the present disclosure is to provide a plasticizer composition including dioctyl terephthalate (DOTP; di(2-ethylhexyl)terephthalate), a vegetable oil, and an epoxidized vegetable oil in order to provide a plasticizer composition having the excellent characteristics described above.

DOTP has excellent low-temperature stability and has good migration resistance among the non-phthalate plasticizers, but its migration resistance is inferior to existing phthalate plasticizers. Additionally, thermal stability is somewhat inferior, and elongation is also somewhat inferior.

The vegetable oil is excellent at improving tensile strength and elongation, but its thermal stability is inferior and its migration resistance is also somewhat inferior.

On the other hand, the epoxidized vegetable oil has excellent thermal stability, excellent migration resistance, and low volatilization loss, but is inferior in elongation and low-temperature stability.

Accordingly, in order to improve physical properties of a vinyl chloride resin composition containing a plasticizer including DOTP, a vegetable oil, and an epoxidized vegetable oil, they are required to be mixed in an appropriate ratio.

Therefore, the plasticizer composition of the present disclosure may include 20 to 70 parts by weight of DOTP, 10 to 40 parts by weight of the vegetable oil, and 10 to 40 parts by weight of the epoxidized vegetable oil, based on 100 parts by weight of the total plasticizer composition.

Specifically, DOTP may be included in an amount of 20 parts by weight or more, 30 parts by weight or more, or 40 parts by weight or more and 70 parts by weight or less, or 60 parts by weight or less, based on 100 parts by weight of the total plasticizer composition. In addition, the vegetable oil may be included in an amount of 10 parts by weight or more, or 20 parts by weight, and 40 parts by weight or less, or 30 parts by weight or less, based on 100 parts by weight of the total plasticizer composition. Additionally, the epoxidized vegetable oil may be included in an amount of 10 parts by weight or more, or 20 parts by weight or more, and 40 parts by weight or less, or 30 parts by weight or less, based on 100 parts by weight of the total plasticizer composition.

If DOTP is included in an amount of less than 20 parts by weight, the effect of improving thermal stability may be poor, the haze value may increase, and the yellow index may increase, which may impair aesthetics. If it is included in an amount of more than 70 parts by weight, the effect of improving thermal stability may also be poor, and the effect of improving elongation and migration resistance may be insignificant.

If the vegetable oil is included in an amount of less than 10 parts by weight, there may be a problem of poor thermal stability, and if the vegetable oil is included in excess of 40 parts by weight, the effect of improving volatilization loss may be lowered, or the haze value and the yellow index may increase, which may impair aesthetics.

In addition, if the epoxidized vegetable oil is included in an amount of less than 10 parts by weight, thermal stability may be poor, the effect of improving elongation may be reduced, and the amount of plasticizer migrated may increase. If the epoxidized vegetable oil is included in excess of 40 parts by weight, freezing of the product may occur in winter due to poor low-temperature stability, and the yellow index may increase, which may impair aesthetics.

In addition, if the plasticizer composition includes more DOTP than the above mixing ratio and less vegetable oil or epoxidized vegetable oil than the above mixing ratio, thermal stability of the resin including the same may be poor and elongation may be deteriorated. On the other hand, if DOTP is included less than the above mixing ratio and the vegetable oil or epoxidized vegetable oil is included more than the above mixing ratio, the effect of improving volatilization loss may be insignificant, and the haze and yellow index characteristics may be deteriorated, which may impair aesthetics.

Additionally, the weight ratio of the vegetable oil and the epoxidized vegetable oil may be 1:5 to 5:1. Specifically, the weight ratio of the vegetable oil and the epoxidized vegetable oil may be 1:5 to 4:1, 1:5 to 3:1, or 1:4 to 0.5:1. Preferably, the epoxidized vegetable oil may be included in a higher weight ratio than the vegetable oil. When mixing less or the same amount of epoxidized vegetable oil than vegetable oil, the effect of improving volatilization loss may be insignificant and the effect of improving plasticizer migration may be low.

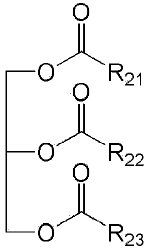

The vegetable oil may include, for example, a compound having the structure of [Chemical Formula 2] below.
[Chemical Formula 2]

The vegetable oil may have a triglyceride structure in which glycerol and fatty acid form an ester bond. R₂₁ to R₂₃ are linear or branched alkenyl or alkyl groups having 1 to 20 carbon atoms, but do not include an epoxy group. The degree of unsaturation of R₂₁ to R₂₃ may affect the color, texture, mechanical properties, etc. of the final resin composition. This degree of unsaturation can be measured by measuring the iodine value, which iodines the unsaturated bond.

For example, the vegetable oil may include at least one selected from the group consisting of soybean oil, castor oil, linseed oil, palm oil, tall oil, tung oil, grape seed oil, olive oil, jojoba oil, poppy seed oil, cottonseed oil, canola oil, wheat germ oil, peanut oil, walnut oil, and derivatives thereof. The derivative of the vegetable oil may be a mixture of vegetable oil, fatty acid, halogenated compound, etc.

The epoxidized vegetable oil may include a compound with a structure having an epoxy group in the fatty acid chain of the vegetable oil, as shown in [Chemical Formula 3].

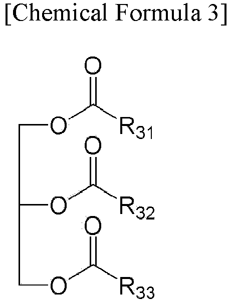

The epoxidized vegetable oil may be a compound in which an epoxy group is introduced into an unsaturated bond of the vegetable oil through an epoxidation reaction. R₃₁ to R₃₃ may be linear or branched alkenyl or alkyl groups having 1 to 20 carbon atoms containing an epoxy group. The epoxidized vegetable oil is obtained by subjecting the vegetable oil to an epoxidation reaction. Formic acid can be used in the epoxidation reaction.

For example, the epoxidized vegetable oil may include at least one selected from the group consisting of epoxidized soybean oil, epoxidized castor oil, epoxidized linseed oil, epoxidized palm oil, epoxidized tall oil, epoxidized tung oil, epoxidized grape seed oil, epoxidized olive oil, epoxidized jojoba oil, epoxidized poppy seed oil, epoxidized cottonseed oil, epoxidized canola oil, epoxidized wheat germ oil, epoxidized peanut oil, and epoxidized walnut oil.

The plasticizer composition including the epoxidized vegetable oil has improved volatilization characteristics and thermal stability. However, low-temperature stability is low due to the epoxy structure, so there may be a problem of freezing at low temperatures, and its high viscosity limits its use, especially in winter.

The plasticizer composition according to one embodiment of the present disclosure maintains the advantages of diethylhexyl terephthalate compound, while maintaining the volatilization characteristics and thermal stability, which are the advantages of epoxidized vegetable oil. Additionally, low-temperature stability and viscosity characteristics, which are disadvantages of plasticizers with an epoxy structure, are improved by including the vegetable oil in a specific ratio.

The plasticizer composition may have thermal stability of 80 minutes or more. Specifically, the thermal stability of the plasticizer composition may be 80 to 150 minutes, 90 to 150 minutes, 90 to 140 minutes, or 90 to 130 minutes.

Further, the plasticizer composition may have excellent low-temperature stability as it does not freeze at temperatures ranging from -20 °C to -10 °C. In this disclosure, freezing means that a plasticizer composition in a liquid state forms crystals and changes into a solid state without fluidity when observed with the naked eye.

In addition, the present disclosure is to provide a plasticizer composition including recycling dioctyl terephthalate (recycling di-ethylhexyl terephthalate, hereinafter R-DOTP), a vegetable oil, and an epoxidized vegetable oil in order to provide a plasticizer composition having the excellent characteristics described above.

R-DOTP has the advantage of excellent thermal stability and low volatilization loss, but its migration resistance is inferior to existing phthalate plasticizers. However, the existing citrate-based plasticizers, TBC (tributyl citrate) and TOC (trioctyl citrate), have a characteristic sour odor, making it difficult to use them in food sealing films. In addition, when using the citrate-based plasticizers, there was a problem that product properties were deteriorated during high-temperature processing due to poor volatility resistance. However, R-DOTP has less odor, and has excellent volatility resistance in that it exhibits a volatilization loss of about 0.3% while the citrate-based plasticizers have a volatilization loss of about 2% or more at 200 °C.

Additionally, the gelling rate is superior to unrecycled DOTP.

In addition, the recycling terephthalate-based compounds have a higher acid value compared to pure terephthalate-based compounds. Specifically, the R-DOTP may have an acid value of 0.25 KOH mg/g or less, 0.20 KOH mg/g or less, or 0.15 KOH mg/g or less. There is no specific lower limit, because the lower acid value can be evaluated as the better. In theory, the lower limit may be 0 KOH mg/g. Specifically, it may be 0.05 KOH mg/g or more, 0.1 KOH mg/g or more, or 0.14 KOH mg/g or more.

When the acid value is too high, exceeding 0.2 KOH mg/g, there are many impurities, so that the color of the plasticizer composition may change from colorless and transparent to yellow or brown, the odor may be severe, or plasticizer migration resistance may become poor.

Herein, the acid value is a weight (mg) of potassium hydroxide (KOH) required to neutralize the acid contained in 1 g of a sample, and can be obtained by titrating the sample solution with an alcoholic KOH solution having a concentration of 0.1 N.

The R-DOTP may be a commercially available product, or may be obtained from wastes using by using a known method.

For example, the R-DOTP may be obtained by depolymerizing waste polyesters to obtain an aromatic dicarboxylic acid or an ester thereof, and reacting it with appropriate alcohol. Alternatively, terephthalic acid is extracted from wastewater discharged during caustic reduction processing of polyester fibers, wastewater generated in the production of pure terephthalate-based compounds, and wastes such as residues after filtration, and reacted with alcohol to obtain recycling phthalate-based compounds.

Recycling phthalate-based compounds have a yellow color and a foul smell like oil due to impurities mixed in during the recycling process from wastes. In addition, the recycling phthalate-based compound often has a high acid value. Due to these problems, the recycling phthalate-based compound has a problem in that it is difficult to apply it in the manufacture of high-quality products in which color or smell is important. Accordingly, the present disclosure mixed a vegetable oil and an epoxidized vegetable oil with R-DOTP, thereby solving color and odor problems derived from the recycling phthalate-based compound.

The vegetable oil is excellent at improving tensile strength and elongation, but its thermal stability is inferior and its migration resistance is also somewhat inferior.

On the other hand, the epoxidized vegetable oil has excellent thermal stability, excellent migration resistance, and small volatilization loss, but is inferior in elongation and low-temperature stability.

Accordingly, in order to improve physical properties of a vinyl chloride resin composition containing a plasticizer including R-DOTP, a vegetable oil, and an epoxidized vegetable oil, they are required to be mixed in an appropriate ratio.

Therefore, the plasticizer composition of the present disclosure may include 20 to 70 parts by weight of R-DOTP, 10 to 40 parts by weight of the vegetable oil, and 10 to 40 parts by weight of the epoxidized vegetable oil, based on 100 parts by weight of the total plasticizer composition.

Specifically, R-DOTP may be included in an amount of 20 parts by weight or more, 30 parts by weight or more, or 40 parts by weight or more and 70 parts by weight or less, or 60 parts by weight or less, based on 100 parts by weight of the total plasticizer composition. In addition, the vegetable oil may be included in an amount of 10 parts by weight or more, or 20 parts by weight, and 40 parts by weight or less, or 30 parts by weight or less, based on 100 parts by weight of the total plasticizer composition. Additionally, the epoxidized vegetable oil may be included in an amount of 10 parts by weight or more, or 20 parts by weight or more, and 40 parts by weight or less, or 30 parts by weight or less, based on 100 parts by weight of the total plasticizer composition.

If DOTP is included in an amount of less than 20 parts by weight, a problem of severe loss of plasticizer during product processing may occur due to large volatilization loss. If it is included in an amount of more than 70 parts by weight, the gelling time may be slow and the effect of improving thermal stability may be poor.

If the vegetable oil is included in an amount of less than 10 parts by weight, the gelling time may be slow and the effect of improving elongation may be lowered. If the vegetable oil is included in an amount of more than 40 parts by weight, the effect of improving volatilization loss may be significantly lowered.

In addition, if the epoxidized vegetable oil is included in an amount of less than 10 parts by weight, thermal stability and haze characteristics may be poor, the effect of improving elongation may be reduced, and the amount of plasticizer migrated may increase. If the epoxidized vegetable oil is included in an amount of more than 40 parts by weight, the effect of improving volatilization loss may be lowered, or the yellow index may increase, which may impair aesthetics.

In addition, if the plasticizer composition includes more R-DOTP than the above mixing ratio and less vegetable oil or epoxidized vegetable oil than the above mixing ratio, thermal stability of the resin including the same may be poor and elongation may be deteriorated. On the other hand, if R-DOTP is included less than the above mixing ratio and the vegetable oil or epoxidized vegetable oil is included more than the above mixing ratio, the effect of improving volatilization loss may be insignificant, and the haze and yellow index characteristics may be deteriorated, which may impair aesthetics.

Additionally, the weight ratio of the vegetable oil and the epoxidized vegetable oil may be 1:5 to 5:1. Specifically, the weight ratio of the vegetable oil and the epoxidized vegetable oil may be 1:5 to 4:1, 1:5 to 3:1, or 1:4 to 0.5:1. Preferably, the epoxidized vegetable oil may be included in a higher weight ratio than the vegetable oil. When mixing less or the same amount of epoxidized vegetable oil than vegetable oil, the effect of improving volatilization loss may be insignificant and the effect of improving plasticizer migration may be low.

The vegetable oil may include, for example, a compound having the structure of [Chemical Formula 2] below.

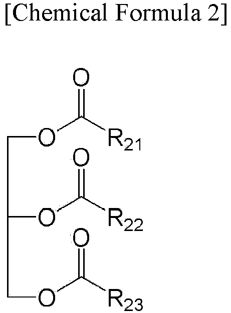

The vegetable oil may have a triglyceride structure in which glycerol and fatty acid form an ester bond. R₂₁ to R₂₃ are linear or branched alkenyl or alkyl groups having 1 to 20 carbon atoms, but do not include an epoxy group. The degree of unsaturation of R₂₁ to R₂₃ may affect the color, texture, mechanical properties, etc. of the final resin composition. This degree of unsaturation can be measured by measuring the iodine value, which iodines the unsaturated bond.

For example, the vegetable oil may include at least one selected from the group consisting of soybean oil, castor oil, linseed oil, palm oil, tall oil, tung oil, grape seed oil, olive oil, jojoba oil, poppy seed oil, cottonseed oil, canola oil, wheat germ oil, peanut oil, walnut oil, and derivatives thereof. The derivative of the vegetable oil may be a vegetable oil, a fatty acid, a halogenated compound, or a mixture thereof.

The epoxidized vegetable oil may include a compound with a structure having an epoxy group in the fatty acid chain of the vegetable oil, as shown in [Chemical Formula 3].

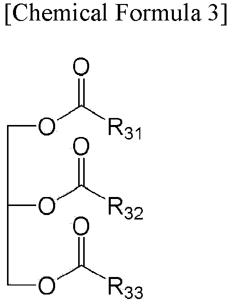

The epoxidized vegetable oil may be a compound in which an epoxy group is introduced into an unsaturated bond of the vegetable oil through an epoxidation reaction. R₃₁ to R₃₃ may be linear or branched alkenyl or alkyl groups having 1 to 20 carbon atoms containing an epoxy group. The epoxidized vegetable oil is obtained by subjecting the vegetable oil to an epoxidation reaction. Formic acid can be used in the epoxidation reaction.

For example, the epoxidized vegetable oil may include at least one selected from the group consisting of epoxidized soybean oil, epoxidized castor oil, epoxidized linseed oil, epoxidized palm oil, epoxidized tall oil, epoxidized tung oil, epoxidized grape seed oil, epoxidized olive oil, epoxidized jojoba oil, epoxidized poppy seed oil, epoxidized cottonseed oil, epoxidized canola oil, epoxidized wheat germ oil, epoxidized peanut oil, and epoxidized walnut oil.

The plasticizer composition including the epoxidized vegetable oil has improved volatilization characteristics and thermal stability. However, low-temperature stability is low due to the epoxy structure, so there may be a problem of freezing at low temperatures, and its high viscosity limits its use, especially in winter.

The plasticizer composition according to one embodiment of the present disclosure maintains the advantages of recycling dioctyl terephthalate, while maintaining the volatilization characteristics and thermal stability, which are the advantages of epoxidized vegetable oil. Additionally, low-temperature stability and viscosity characteristics, which are disadvantages of plasticizers with an epoxy structure, are improved by including the vegetable oil in a specific ratio.

The plasticizer composition may have thermal stability of 80 minutes or more. Specifically, the thermal stability of the plasticizer composition may be 80 to 150 minutes, 90 to 150 minutes, 90 to 140 minutes, or 90 to 130 minutes.

Further, the plasticizer composition may have excellent low-temperature stability as it does not freeze at temperatures ranging from -20 °C to -10 °C. In this disclosure, freezing means that a plasticizer composition in a liquid state forms crystals and changes into a solid state without fluidity when observed with the naked eye.

Additionally, the present disclosure can provide a vinyl chloride resin composition including the above plasticizer composition. That is, it is possible to provide a vinyl chloride resin composition with excellent physical properties such as migration resistance, thermal stability, low-temperature stability, and elongation by including the plasticizer composition.

The plasticizer composition may include a plasticizer composition containing dioctyl terephthalate (di(2-ethylhexyl)terephthalate, hereinafter DOTP), a vegetable oil, and an epoxidized vegetable oil; a plasticizer composition containing recycling dioctyl terephthalate (recycling di-ethylhexyl terephthalate, hereinafter R-DOTP), a vegetable oil, and an epoxidized vegetable oil; or a combination thereof.

Therefore, the vinyl chloride resin composition of the present disclosure may include 100 parts by weight of the vinyl chloride resin and 10 to 200 parts by weight of the plasticizer composition.

If the content of the plasticizer composition among the above contents is below the lower limit of the above range, the effect of improving processability, thermal stability, and low-temperature stability of the vinyl chloride resin composition may be poor. If the plasticizer content exceeds the upper limit of the above range, a large amount of plasticizer migrates and a bleeding effect, in which the plasticizer leaks out onto the surface of the final product, is likely to occur, which may cause surface stickiness and cause problems in processing and final products.

The vinyl chloride resin may be a (co)polymer prepared by polymerizing a vinyl chloride monomer alone, or a vinyl chloride monomer and a comonomer copolymerizable therewith. At this time, the polymerization method is not particularly limited, and may be performed according to conventional polymerization methods known in the art to which the present invention pertains such as suspension polymerization, micro suspension polymerization, emulsion polymerization, mini-emulsion polymerization, or seed emulsion polymerization by mixing a suspending agent, a buffer, and a polymerization initiator. When produced by emulsion polymerization or micro suspension polymerization, the average particle size of the prepared vinyl chloride resin is small and uniform compared to when produced by other polymerization methods.

Additionally, the vinyl chloride resin composition may further include other additives such as a stabilizer, a filler, a blowing agent, and a slip agent, and the additives may be appropriately selected depending on the physical properties to be improved in the vinyl chloride resin composition.

The stabilizer is added for the purpose of preventing various changes in physical properties that occur when HCl is separated from the vinyl chloride resin and forms a polyene structure, which is a chromophore, causing cleavage and cross-linking of the main chain. The stabilizers include at least one selected from the group consisting of Ca-Zn-based compounds, K-Zn-based compounds, Ba-Zn-based compounds, Na-Zn compounds, Na-K-Zn compounds, organic Tin-based compounds, metallic soap-based compounds, phenol-based compounds, phosphoric acid ester-based compounds, and phosphorous acid ester-based compounds. More specific examples of stabilizers that can be used in the present disclosure include Ca-Zn-based compounds; K-Zn-based compounds; Ba-Zn-based compounds; organic Tin-based compounds such as mercaptide-based compounds, maleic acid-based compounds, or carboxylic acid-based compounds; metallic soap-based compounds such as Mg-stearate, Ca-stearate, Pb-stearate, Cd-stearate, or Ba-stearate; phenolic compounds; phosphoric acid ester-based compounds; or phosphorous acid ester-based compounds. They are optionally included depending on the purpose of use. In the present disclosure, it is particularly preferable to use Ba-Zn-based compounds or Ca-Zn-based compounds.

In addition, the vinyl chloride resin composition may further include 10 parts by weight or less of a stabilizer based on 100 parts by weight of the vinyl chloride resin. Specifically, the stabilizer may be added in an amount of 1 part by weight or more, or 2 parts by weight or more and 10 parts by weight or less, 8 parts by weight or less, 6 parts by weight or less, 4 parts by weight or less, or 3 parts by weight or less based on 100 parts by weight of the vinyl chloride resin.

The blowing agent may be a chemical blowing agent, a physical blowing agent, or a mixture thereof. The blowing agent may be used to reduce the weight of the resin composition. The chemical blowing agent is not particularly limited as long as it is a compound that decomposes above a certain temperature and generates gas. Examples thereof may include azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, trihydrazino triazine, and the like. Further, examples thereof include sodium bicarbonate, potassium bicarbonate, ammonium bicarbonate, sodium carbonate, and ammonium carbonate. In addition, examples of the physical blowing agent may include inorganic blowing agents such as carbon dioxide, nitrogen, argon, water, air, and helium, and organic blowing agents such as aliphatic hydrocarbons containing 1 to 9 carbon atoms, aliphatic alcohols containing 1 to 3 carbon atoms and halogenated aliphatic hydrocarbons containing 1 to 4 carbon atoms.

The slip agent may be at least one selected from the group consisting of Erucamide, Oleamide, Stearoamide, and Behenamide. In addition, the slip agent may be included in an amount of 10 parts by weight or less based on 100 parts by weight of the vinyl chloride resin, and specifically, each of the above slip agents may be included in an amount of 10 parts by weight or less.

The filler may be at least one selected from the group consisting of talc, silica, kaolin, alumina, magnesium hydroxide, calcium carbonate (CaCOs), and barium sulfate (BaSO₄). Additionally, the filler may be included in an amount of 600 parts by weight or less based on 100 parts by weight of the vinyl chloride resin.

The other additives may be used within a range that does not impair the purpose of the present invention in addition to the above exemplary materials, and may be selected in an appropriate ratio depending on the purpose of the vinyl chloride resin composition.

The vinyl chloride resin composition according to the present disclosure can be prepared by a method generally known in the art using a vinyl chloride resin, a plasticizer, and optionally additives, and the method is not particularly limited.

In addition, the vinyl chloride resin containing a plasticizer composition that includes DOTP, a vegetable oil, and an epoxidized vegetable oil and satisfies the composition ratio may have a tensile strength of 200 kgf/cm² or more.

In addition, the vinyl chloride resin containing a plasticizer composition that includes R-DOTP, a vegetable oil, and an epoxidized vegetable oil and satisfies the composition ratio may have a tensile strength of 200 kgf/cm² or more.

In addition, it is possible to provide a vinyl chloride resin composition exhibiting excellent physical properties such as excellent migration resistance, low volatilization loss, less odor, thermal stability, low-temperature stability, elongation, and fast gelling rate by including the plasticizer composition.

In particular, the vinyl chloride resin composition has a yellow index measured according to the ASTM E313 of 25 or less, 24 or less, 23 or less, 22 or less, 21 or less, or 20 or less, and 10 or more, or 15 or more.

Specifically, the high elongation makes it easy to use for packaging in food sealing films. When migration resistance is excellent, the smaller the migration amount of plasticizer, the better the durability of the product. In addition, when the vinyl chloride resin is used in food sealing films, the odor has a negative effect on the food being packaged, so it is preferable to reduce the odor. Further, if the volatilization loss is low, the amount of plasticizer lost during high-temperature processing is small, so the physical properties of the product are not deteriorated. In addition, a faster gelling rate is more advantageous for productivity.

Meanwhile, in the present disclosure, there is provided a vinyl chloride resin product including a vinyl chloride resin composition.

The vinyl chloride resin products may be used in various extrusion, injection, calendering and compounding industries such as interior decoration materials including wallpaper, flooring, and decorative sheets, packaging materials including food packaging wrap, sealing films for food packaging, wires, automobile interior materials, films, hoses, and tubes, but is not limited thereto.

Hereinafter, preferred embodiments are presented to facilitate the understanding of the invention. However, the following examples are for illustrative purposes only and are not intended to limit the present disclosure.

### Examples 1 to 5 and Comparative Examples 1 to 9

### Preparation of plasticizer composition

A plasticizer composition was prepared with the mixing ratio shown in Table 1 below. SP-390 (manufactured by Hanwha Solutions, cas no 6422-86-2) was used as DOTP, palm oil (VO, cas 95009-45-3) was used as the vegetable oil, and epoxidized soybean oil (EV, cas no 8013-07-8) was used the epoxidized vegetable oil. Additionally, TBC in Comparative Example 9 refers to Tributyl Citrate.

### Preparation of vinyl chloride resin composition

A resin with the product name P-1000 (Hanwha Solutions, degree of polymerization 1000±50, bulk density 0.55±0.04 g/cm³) was used as the vinyl chloride resin.

A vinyl chloride resin composition was prepared by adding 40 parts by weight of the plasticizer composition and 1.5 parts by weight of BZ-150T (manufactured by Songwon) as an additive to 100 parts by weight of the vinyl chloride resin. The mixing ratio of the main components in the plasticizer composition followed the ratio shown in Table 1 below.

### Experimental Example 1

### (1) Volatilization loss (%)

20 g of the prepared plasticizer composition was placed in a glass dish, and the amount of plasticizer volatilized at 200 °C for 4 hours was measured. The volatilization loss percentage (%) was calculated as (weight of plasticizer before volatilization- weight of plasticizer after volatilization)/(weight of plasticizer before volatilization) ×100 (%).

### (2) Odor evaluation

Odor evaluation was performed by a sensory evaluation. After placing 1 kg of a plasticizer in an airtight container and leaving it at room temperature for 1 day, the container was opened and the odor was evaluated by smelling it. The evaluation results by five people were summarized.

### (3) Thermal stability

The sheet prepared by performing roll mill processing on the prepared vinyl chloride resin composition was cut into straps measuring 15 mm × 480 mm. These straps were then mounted in a Mathis Oven at 190 °C. The specimen mounted in the oven was set to be discharged from the oven at a rate of 15 mm/5 minutes. The heat resistance time (in minutes) was calculated by the length (uncarbonized length, mm) from the end of test to the start of discoloration.

### (4) Hardness (Shear A)

A flat sheet having a thickness of about 6 mm was prepared by sequentially performing roll mill processing (170 °C, 3 minutes) and press processing (180 °C, 8 minutes) on the prepared vinyl chloride resin composition. Based on the ASTM D2240 method, a needle of a hardness tester (A type) was completely lowered to one place of the specimen to read a hardness value after 5 seconds. After testing three places for each specimen, the average value thereof was taken. The measured hardness value is used as an index indicating the plasticization efficiency.

### (5) Transmittance and haze

A flat sheet having a thickness of about 5 mm was prepared by sequentially performing roll mill processing (170 °C, 3 minutes) and press processing (180 °C, 8 minutes) on the vinyl chloride resin composition. The transmittance and haze of the prepared specimen were evaluated using a BYK-Gardner device according to the ASTM D1003.

### (6) Migration resistance

A flat sheet having a thickness of about 2 mm was prepared by sequentially performing roll mill processing (170 °C, 3 minutes) and press processing (180 °C, 8 minutes) on the vinyl chloride resin composition, and the prepared sheet was cut into a circular specimen having a diameter of about 4 cm.

An oil-absorbing paper made of polypropylene was placed on the upper/lower part of the specimen and left at 60 °C under a load of 5 kg for 7 days to promote plasticizer migration. After the plasticizer migration experiment was completed, the weight change rates of the specimen and the oil paper were measured.

The weight change rate of the specimen was calculated as [(weight change of specimen/weight of specimen before test) × 100], and the weight change rate of oil paper (%) was calculated as [(weight change of oil paper/weight of oil paper before test) × 100].

The weight loss of the specimen is the same as the weight gain of the oil paper, so in this experiment, plasticizer migration resistance was evaluated only with the weight change rate of the specimen.

### (7) Yellow index

A flat sheet having a thickness of about 6 mm was prepared by sequentially performing roll mill processing (170 °C, 3 minutes) and press processing (180 °C, 8 minutes) on the vinyl chloride resin composition. The Yellow index (YI) of the prepared specimen was evaluated according to the ASTM E313.

### (8) Tensile strength and elongation

The tensile strength and elongation were measured at a rate of 500 mm/min using UTM (Universal Test Machine) after manufacturing the molding sheet into a dumbbellshaped specimen according to the ASTM D 638.

### (9) Low-temperature stability

In order to indirectly evaluate the stability of outdoor storage in winter, the mixed plasticizer composition was placed in a freezer at -20 °C to -10 °C, and the freezing shape was observed. The condition in which the product was not frozen was classified as good, and the condition in which more than 10% of the product was frozen was classified as poor.

The compositions and evaluation results of Examples 1 to 5 are shown in Table 1, and the compositions and evaluation results of Comparative Examples 1 to 9 are shown in Table 2.

**[Table 1]**

| Plasticizer | Example 1 | Example 2 | Example 3 | Example 4 | Example 5 |
|---|---|---|---|---|---|
| DOTP | 50 | 50 | 50 | 20 | 70 |
| Vegetable oil | 25 | 10 | 40 | 40 | 15 |
| Epoxidized vegetable oil | 25 | 40 | 10 | 40 | 15 |
| TBC | - | - | - | - | - |
| Volatilization loss (%) | 3.2 | 1.6 | 4.8 | 4.0 | 2.4 |
| Odor | good | good | good | good | good |
| Thermal stability (min) | 95 | 125 | 90 | 125 | 90 |
| Hardness (Share A) | 83 | 83 | 83 | 84 | 83 |
| Transmittance (%) | 91 | 91 | 91 | 91 | 91 |
| Haze (%) | 3.8 | 3.3 | 3.9 | 4 | 4.2 |
| Migration resistance (%) | 1.0 | 0.9 | 1.2 | 1 | 1.1 |
| Yellow Index | 22.5 | 22 | 22.5 | 21 | 20.5 |
| Tensile strength (kgf/cm²) | 202 | 200 | 201 | 202 | 200 |
| Elongation (%) | 399 | 400 | 405 | 380 | 390 |
| Low-temperature stability | good | good | good | good | good |

**[Table 2]**

| Plasticizer | Comp . Ex. 1 | Comp . Ex. 2 | Comp . Ex. 3 | Comp . Ex. 4 | Comp . Ex. 5 | Comp . Ex. 6 | Comp . Ex. 7 | Comp . Ex. 8 | Comp . Ex. 9 |
|---|---|---|---|---|---|---|---|---|---|
| DOTP | 100 | - | - | 90 | 10 | 70 | 70 | - | 40 |
| Vegetable oil | - | 100 | - | 5 | 45 | 30 | - | 50 | - |
| Epoxidized vegetable oil | - | - | 100 | 5 | 45 | - | 30 | 50 | - |
| TBC | - | - | - | - | - | - | - | - | 60 |
| Volatilization loss (%) | 1.2 | 10 | 0.4 | 1.2 | 4.8 | 3.2 | 0.9 | 5.6 | 5.6 |
| Odor | good | good | good | good | good | good | good | strong | strong |
| Thermal stability (min) | 60 | 20 | 150 | 80 | 130 | 50 | 100 | 70 | 70 |
| Hardness (Share A) | 83 | 83 | 83 | 83 | 84 | 83 | 83 | 84 | 82 |
| Transmittance (%) | 91 | 91 | 91 | 91 | 91 | 91 | 91 | 91 | 92 |
| Haze (%) | 3.8 | 2.8 | 2 | 3.7 | 4.1 | 3.5 | 3 | 4.2 | 3.5 |
| Migration resistance (%) | 1.3 | 1.5 | 0.5 | 1.2 | 0.7 | 1.4 | 0.8 | 0.7 | 0.5 |
| Yellow Index | 19.5 | 22 | 25 | 20.5 | 23 | 20.6 | 20.5 | 23.5 | 16.8 |
| Tensile strength (kgf/cm²) | 200 | 208 | 199 | 201 | 204 | 204 | 198 | 204 | 202 |
| Elongation (%) | 362 | 422 | 423 | 363 | 399 | 413 | 401 | 400 | 340 |
| Low-temperature stability | frozen | good | frozen | frozen | good | good | frozen | good | good |

Referring to Tables 1 and 2 above, the plasticizer composition must not only contain DOTP, vegetable oil, and epoxidized vegetable oil, but also satisfy the composition ratio to ensure excellent physical properties such as volatilization loss, odor, thermal stability, hardness, transmittance, and haze.

### Examples 6 to 10 and Comparative Examples 10 to 22

### Preparation of plasticizer composition

A plasticizer composition was prepared with the mixing ratio shown in Table 3 below. A product manufactured by Runzenengyuan, China, with an acid value of 0.175 mg/g was used as R-DOTP. Palm oil (VO, cas 95009-45-3) was used as the vegetable oil, and epoxidized soybean oil (EV, cas no 8013-07-8) was used the epoxidized vegetable oil. Additionally, TBC in Comparative Example 22 refers to Tributyl Citrate.

### Preparation of vinyl chloride resin composition

A vinyl chloride resin with the product name P-1000 (Hanwha Solutions, degree of polymerization 1000±50, bulk density 0.55±0.04 g/cm³) was used.

A vinyl chloride resin composition was prepared by adding 40 parts by weight of the plasticizer composition and 2 parts by weight of Ca/Zn-based stabilizer as an additive to 100 parts by weight of the vinyl chloride resin. The mixing ratio of the main components in the plasticizer composition followed the ratio shown in Tables 3 to 5 below.

### Experimental Example 2

### (1) Gelling time

54 g of the vinyl chloride resin composition was added to a Brabender Mixer at 95 °C, and mixed at 30 rpm for 10 minutes. The gelling time of the resin was analyzed by changing the torque in the mixer during processing.

The volatilization loss evaluation, odor evaluation, thermal stability evaluation, hardness (Shear A) evaluation, transmittance and haze evaluation, plasticizer migration evaluation, yellow index evaluation, tensile strength and elongation evaluation, and low-temperature stability evaluation were carried out in the same manner as in Examples 1 to 5 and Comparative Examples 1 to 9 above, excluding the gelling time.

The compositions and evaluation results of Examples 6 to 10 are shown in Table 3, the compositions and evaluation results of Comparative Examples 1 to 7 are shown in Table 4, and the compositions and evaluation results of Comparative Examples 10 to 22 are shown in Table 5.

**[Table 3]**

| Plasticizer | Example 6 | Example 7 | Example 8 | Example 9 | Example 10 |
|---|---|---|---|---|---|
| R-DOTP | 50 | 50 | 50 | 20 | 70 |
| Vegetable oil | 25 | 10 | 40 | 40 | 15 |
| Epoxidized vegetable oil | 25 | 40 | 10 | 40 | 15 |
| TBC | - | - | - | - | - |
| DOTP | - | - | - | - | - |
| Gelling time (sec) | 253 | 252 | 255 | 220 | 272 |
| Volatilization loss (%) | 1.6 | 0.6 | 2.0 | 2.0 | 1.2 |
| Odor | good | good | good | good | good |
| Thermal stability (min) | 95 | 125 | 90 | 125 | 90 |
| Hardness (Share A) | 83 | 84 | 83 | 84 | 83 |
| Transmittance (%) | 91 | 91 | 91 | 91 | 91 |
| Haze (%) | 3.7 | 3.2 | 3.8 | 4 | 4.2 |
| Migration resistance (%) | 1.1 | 0.9 | 1.3 | 1.2 | 1.1 |
| Yellow Index | 24 | 21 | 22 | 21 | 20.5 |
| Tensile strength (kgf/cm²) | 212 | 210 | 211 | 202 | 200 |
| Elongation (%) | 399 | 400 | 405 | 380 | 390 |
| Low-temperature | good | good | good | good | good |
| stability | | | | | |

**[Table 4]**

| Plasticizer | Comp. Ex. 10 | Comp. Ex. 11 | Comp. Ex. 12 | Comp. Ex. 13 | Comp. Ex. 14 | Comp. Ex. 15 | Comp. Ex. 16 |
|---|---|---|---|---|---|---|---|
| R-DOTP | 100 | - | - | - | - | - | - |
| Vegetable oil | - | 100 | - | - | 25 | 10 | 40 |
| Epoxidized vegetable oil | - | - | 100 | - | 25 | 40 | 10 |
| TBC | - | - | - | - | - | - | - |
| DOTP | - | - | - | 100 | 50 | 50 | 50 |
| Gelling time (sec) | 286 | 182 | 182 | 354 | 283 | 282 | 285 |
| Volatilization loss (%) | 1.0 | 5.0 | 0.2 | 0.6 | 1.6 | 0.8 | 2.4 |
| Odor | good | good | good | good | good | good | good |
| Thermal stability (min) | 40 | 20 | 150 | 60 | 90 | 110 | 80 |
| Hardness (Share A) | 83 | 83 | 83 | 83 | 83 | 83 | 83 |
| Transmittance (%) | 91 | 91 | 91 | 91 | 91 | 91 | 91 |
| Haze(%) | 3.8 | 2.8 | 2 | 3.8 | 3.8 | 3.3 | 3.9 |
| Migration resistance (%) | 1.3 | 1.5 | 0.5 | 1.3 | 1.0 | 0.9 | 1.2 |
| Yellow Index | 22.5 | 22 | 25 | 19.5 | 22.5 | 22 | 22.5 |
| Tensile strength (kgf/cm²) | 192 | 208 | 199 | 200 | 202 | 200 | 201 |
| Elongation (%) | 363 | 422 | 423 | 362 | 399 | 400 | 405 |
| Low-temperature stability | frozen | good | frozen | frozen | good | good | good |

**[Table 5]**

| Plasticizer | Comp. Ex. 17 | Comp. Ex. 18 | Comp. Ex. 19 | Comp. Ex. 20 | Comp. Ex. 21 | Comp. Ex. 22 |
|---|---|---|---|---|---|---|
| R-DOTP | 90 | 10 | 70 | 70 | | 40 |
| Vegetable oil | 5 | 45 | 30 | | 50 | |
| Epoxidized vegetable oil | 5 | 45 | | 30 | 50 | |
| TBC | | | | | | 60 |
| DOTP | | | | | | |
| Gelling time (sec) | 256 | 192 | 252 | 255 | 180 | 155 |
| Volatilization loss (%) | 1.5 | 1.5 | 1.2 | 1.5 | 1.4 | 1.8 |
| Odor | good | good | good | good | strong | strong |
| Thermal stability (min) | 70 | 130 | 45 | 140 | 70 | 70 |
| Hardness (Share A) | 83 | 84 | 83 | 83 | 84 | 82 |
| Transmittance (%) | 91 | 91 | 91 | 91 | 91 | 92 |
| Haze (%) | 3.7 | 4.1 | 3.5 | 3 | 4.2 | 3.5 |
| Migration resistance (%) | 1.2 | 0.7 | 1.4 | 0.8 | 0.7 | 0.5 |
| Yellow Index | 20 | 22 | 20 | 19 | 22 | 16.8 |
| Tensile strength (kgf/cm²) | 205 | 210 | 211 | 202 | 208 | 202 |
| Elongation (%) | 363 | 399 | 413 | 401 | 400 | 340 |
| Low-temperature stability | frozen | good | frozen | good | good | good |

Referring to Tables 3 to 5 above, the plasticizer composition must not only contain R-DOTP, vegetable oil, and epoxidized vegetable oil, but also satisfy the composition ratio to ensure excellent physical properties such as volatilization loss, odor, thermal stability, low-temperature stability, hardness, transmittance, and haze.

## Claims

1. A plasticizer composition comprising dioctyl terephthalate (DOTP), a vegetable oil, and an epoxidized vegetable oil,
wherein the plasticizer composition comprises 20 to 70 parts by weight of dioctyl terephthalate, 10 to 40 parts by weight of a vegetable oil, and 10 to 40 parts by weight of an epoxidized vegetable oil based on 100 parts by weight of the plasticizer composition.

2. A plasticizer composition comprising recycling dioctyl terephthalate (R-DOTP), a vegetable oil, and an epoxidized vegetable oil,
wherein the plasticizer composition comprises 20 to 70 parts by weight of dioctyl terephthalate, 10 to 40 parts by weight of a vegetable oil, and 10 to 40 parts by weight of an epoxidized vegetable oil based on 100 parts by weight of the plasticizer composition.

3. The plasticizer composition of Claim 2,
wherein the recycling dioctyl terephthalate has an acid value of 0.25 KOH mg/g or less.

4. The plasticizer composition of Claim 1 or Claim 2,
wherein the vegetable oil comprises at least one selected from the group consisting of soybean oil, castor oil, linseed oil, palm oil, tall oil, tung oil, grape seed oil, olive oil, jojoba oil, poppy seed oil, cottonseed oil, canola oil, wheat germ oil, peanut oil, walnut oil, and derivatives thereof.

5. The plasticizer composition of Claim 1 or Claim 2,
wherein the epoxidized vegetable oil comprises at least one selected from the group consisting of epoxidized soybean oil, epoxidized castor oil, epoxidized linseed oil, epoxidized palm oil, epoxidized tall oil, epoxidized tung oil, epoxidized grape seed oil, epoxidized olive oil, epoxidized jojoba oil, epoxidized poppy seed oil, epoxidized cottonseed oil, epoxidized canola oil, epoxidized wheat germ oil, epoxidized peanut oil, and epoxidized walnut oil.

6. The plasticizer composition of Claim 1 or Claim 2,
wherein a weight ratio of the vegetable oil and the epoxidized vegetable oil is 1:5 to 5:1.

7. The plasticizer composition of Claim 1 or Claim 2,
wherein thermal stability is 80 minutes or more.

8. The plasticizer composition of Claim 1 or Claim 2,
wherein the plasticizer composition does not freeze at -20 °C to -10 °C.

9. A vinyl chloride resin composition comprising
a vinyl chloride resin, and the plasticizer composition of Claim 1 or Claim 2.

10. The vinyl chloride resin composition of Claim 9,
wherein the vinyl chloride resin composition comprises the plasticizer composition in an amount of 10 to 200 parts by weight based on 100 parts by weight of the vinyl chloride resin.

11. The vinyl chloride resin composition of Claim 9,
further comprising a stabilizer in an amount of 10 parts by weight or less based on 100 parts by weight of the vinyl chloride resin.

12. The vinyl chloride resin composition of Claim 9,
wherein the stabilizer is at least one selected from the group consisting of a Ca-Zn-based compound, a K-Zn-based compound, a Ba-Zn-based compound, a Na-Zn-based compound, a Na-K-Zn-based compound, an organic Tin-based compound, a metallic soap-based compound, a phenol-based compound, a phosphoric acid ester-based compound, or a phosphorous acid ester-based compound.

13. The vinyl chloride resin composition of Claim 9,
wherein the vinyl chloride resin composition has a tensile strength of 200 kgf/cm² or more.

14. A vinyl chloride resin product comprising the vinyl chloride resin composition of Claim 9.
